# FASCICULE DE BREVET EUROPEEN

(11) **EP 0 409 024 B1**
(45) Date de publication et mention de la délivrance du brevet: **26.01.1994**
(21) Numéro de dépôt: 90113011.2
(22) Date de dépôt: 07.07.1990
(51) Int. Cl.: A47J 31/46, A47J 31/40

(54) **Dispositif de filtration**
Filtervorrichtung
Filtering device

(30) Priorité: 21.07.1989 CH 2738/89
(43) Date de publication de la demande: 23.01.1991
(73) Titulaire: SOCIETE DES PRODUITS NESTLE S.A., 1800 Vevey (CH)
(72) Inventeur: Poulin, Jean-Marc, CH-1373 Chavornay (CH); Schmidely, Hervé, CH-1870 Monthey (CH)

(56) Documents cités:
- EP-A- 0 323 592
- BE-A- 563 687
- CH-A- 427 174
- FR-A- 457 500
- GB-A- 23 444
- US-A- 2 198 614
- US-A- 3 254 589
- US-A- 3 483 812

## Description

La présente invention a trait à des dispositifs de filtration.

Parmi les différents dispositifs de filtration connus, il existe les filtres utilisés dans le domaine de la robinetterie domestique.
Ces filtres se présentent sous forme de cylindres dont la section est coupée par plusieurs grilles ou tamis circulaires, superposés horizontalement et s'entrecroisant. Ces grilles horizontales cassent le jet d'eau courante et rendent l'eau plus mousseuse, en y introduisant de l'air.
Toutefois de tels filtres présentent l'inconvénient, de par leur forme cylindrique, de ne pas permettre un écoulement rapide du liquide.

US-A- 3254589 décrit un dispositif de filtration comprenant au moins deux grilles en forme de sac conique imbriquées les unes dans les autres.

FR-A-457500 décrit un dispositif similaire comportant des grilles en forme de sac cylindrique.

Dans un distributeur automatique de café soluble usuel, lors du fonctionnement de l'appareil, une certaine quantité de café soluble tombe dans un bol mélangeur où arrive ensuite la quantité d'eau chaude nécessaire.
Un agitateur, placé dans le bol mélangeur, effectue un battage mécanique de l'eau et du café, ce qui entraîne la dissolution complète du café ainsi qu'une augmentation de volume du mélange.
Ce phénomène de foisonnement induit la création d'une mousse qui se dépose à la surface du café lorsqu'il tombe dans la tasse.
La mousse créée lors de ce processus est grossière et peut contenir un nombre important de grosses bulles d'air visibles à la surface du café.
Cette mousse, caractéristique du café soluble, peut produire un effet défavorable sur le consommateur, par comparaison à la mousse fine et crémeuse d'un café type espresso.

Le but de la présente invention est de pallier cet inconvénient et de proposer des dispositifs permettant d'obtenir à la surface d'une tasse de café soluble une mousse fine et crémeuse, présentant un aspect favorable et en tous points comparable à la mousse d'un café espresso traditionnel.

A cet effet un objet de l'invention est un dispositif de filtration comprenant au moins deux grilles, les grilles présentant une forme de sac conique ou cylindrique, imbriquées les unes dans les autres caractérisé en ce que les dites grilles sont espacées les unes des autres par une distance comprise entre 0,5 et 4 mm afin de permettre l'obtention d'une mousse fine. D'autres modes particuliers d'exécution sont l'objet des revendications 2 à 6.
Ces dispositifs sont destinés à être placés à l'extrémité inférieure du tuyau d'écoulement sortant du bol mélangeur, c'est-à-dire à la sortie du distributeur.

On a constaté que, de manière surprenante, l'emploi d'un tels dispositifs permet d'assurer l'éclatement des grosses bulles d'air présentes dans la mousse et l'obtention d'une mousse fine et crémeuse, sans trop ralentir le débit du café à sa sortie du distributeur.

Un avantage de ces dispositifs est de favoriser de par leur forme l'écoulement du café hors du distributeur et dans la tasse.
Un autre avantage est de permettre d'éviter le rinçage du tuyau d'écoulement encombré par la mousse avant chaque utilisation.
Un autre avantage est de permettre l'utilisation d'une pression, et donc d'un débit, importante dans le distributeur.

Une mousse de type espresso peut être caractérisée notamment par son volume, sa masse, sa consistance, sa stabilité, la taille des éventuelles grosses bulles et sa couleur.
Ces différentes caractéristiques peuvent dépendre généralement de deux types de facteurs:
- les matières premières utilisées telles que l'eau, le café, les additifs,
- les conditions physiques utilisées telles que la température et le débit de l'eau, l'agitation, le diamètre et la longueur du tuyau d'écoulement. la hauteur de chute.

Lors de l'utilisation des dispositifs selon la présente invention, il est préférable d'avoir une mousse consistante et abondante avant filtration. La mousse formée dans le bol mélangeur doit être suffisamment consistante pour ne pas se dissoudre lors de son écoulement dans le tuyau et de son passage à travers le dispositif de filtration et pour ne pas se désagréger trop rapidement une fois à la surface du café dans la tasse.
La mousse doit aussi être en quantité suffisante pour recouvrir totalement la surface du café dans la tasse.

La consistance et l'abondance de la mousse peuvent être influencées par la quantité et la taille des grosses bulles d'air incluses dans la mousse lors de sa formation. Ces grosses bulles peuvent entraîner une diminution de la stabilité de la mousse, c'est-à-dire une tendance à se désagréger et se dissoudre dans le café plus accentuée. Il est possible de diminuer la taille et la quantité des grosses bulles d'air incluses dans la mousse lors de sa formation en jouant sur les différentes conditions physiques utilisées.

La température de l'eau permet de déterminer la température du café à la sortie du distributeur. La température du café devant être de préférence comprise entre 55°C (en dessous le café est considéré comme froid) et 75°C, l'eau peut être à une température comprise entre 60°C et 95°C, et de préférence 80-85°C.

Le débit auquel le café s'écoule hors du distributeur doit être suffisamment élevé pour permettre un écoulement rapide du café dans la tasse. Ce débit peut être compris entre 2 et 35 ml par seconde, de préférence entre 10-14 ml/s.
Le temps d'agitation dans le bol mélangeur doit être suffisant pour assurer une dissolution complète du café soluble dans l'eau, ainsi que pour permettre l'apparition d'une mousse crémeuse, mais ne doit pas être trop long afin d'éviter la formation de bulles d'air trop grosses et trop nombreuses dans la mousse. L'agitation peut être effectuée par un mixer tournant à 8'000 -10'000 tours/min, pendant 3 à 15 secondes, de préférence pendant 5-9 secondes.
Le tuyau d'écoulement placé à la sortie du bol mélangeur peut avoir une longueur comprise entre 10 et 60 cm, de préférence 15-25 cm, et un diamètre intérieur compris entre 3 et 15 mm, de préférence 6-10 mm.
Un autre facteur pouvant être considéré comme important pour l'utilisation du présent dispositif est la hauteur de chute, c'est-à-dire la distance séparant l'extrémité inférieure du dispositif et la surface du café dans la tasse. La hauteur de chute influence uniquement la quantité de grosses bulles d'air présentes dans la mousse.
Si la hauteur est faible, de l'ordre de 20 mm, la mousse obtenue est très fine et contient très peu de grosses bulles. Si cette hauteur est plus importante, de l'ordre de 100 mm, la mousse est encore fine, mais contient une plus grande quantité de grosses bulles.
La hauteur de chute peut être comprise entre 1 et 100 mm, de préférence entre 20 et 50 mm.

Les dispositifs selon l'invention comprennent donc au moins deux grilles en forme de sac, imbriquées l'une dans l'autre.

Par grille on entend une trame constituée de fils s'entrecroisant de préférence perpendiculairement les uns aux autres.
La maille de la trame, c'est à dire l'espace élémentaire délimité par quatre fils, peut varier en fonction du diamètre des fils utilisés ainsi qu'en fonction de leur écartement.
Cette maille doit être assez fine pour permettre l'éclatement des grosses bulles d'air et l'obtention d'une mousse fine, sans toutefois ralentir le débit du café lors de son passage à travers le dispositif de filtration.
La trame est constituée de préférence de fils présentant un diamètre compris entre 0,08 et 0,20 mm, et un écartement de 0,10-0,50 mm, qui délimitent donc une maille comprise entre 0,02 et 0,42 mm de côté.

Les grilles peuvent présenter toute forme de sac telle qu'elles soient susceptibles de s'imbriquer les unes dans les autres. Elles peuvent présenter en particulier une forme de sac conique ou de cône ou une forme de sac cylindrique.
Si elles présentent une forme de sac conique, les grilles d'un même dispositif peuvent être disposées de manière coaxiale et présenter des diamètres et hauteurs décroissants de l'extérieur vers l'intérieur du dispositif.
Si elles présentent une forme de sac cylindrique, les grilles d'un même dispositif peuvent être disposées coaxialement et présenter des hauteurs sensiblement égales mais des diamètres décroissants de l'extérieur vers l'intérieur du dispositif.

Pour réaliser une grille en forme de sac conique ou cylindrique, on peut découper dans une trame la figure géométrique correspondante (par exemple un rectangle pour le cylindre, un trapèze pour le cône), on peut mettre en forme la trame découpée et joindre les extrémités par collage, soudage, scellage ou tout autre moyen.

Les grilles formant le présent dispositif de filtration peuvent être en nombre variable. Elles doivent être en nombre suffisant pour assurer une bonne filtration de la mousse et permettre l'éclatement des grosses bulles d'air, sans toutefois freiner le débit du café à sa sortie du distributeur.
Les présents dispositifs de filtration comprend, de préférence, 2 à 6 grilles.

La distance comprise entre chaque grille peut influer sur l'efficacité de la filtration.
Afin que chaque grille assure indépendamment des autres une filtration optimale, il est préférable qu'elle soit séparée des grilles qui lui sont voisines par une distance suffisante. Celle-ci doit permettre d'éviter que les grilles n'adhèrent entre elles si elles sont trop proches, ou que la mousse ne se désintègre entre chaque grille, si elles sont trop éloignées. La distance entre chaque grille peut être, par exemple, comprise entre 0,5 et 4 mm, de préférence entre 1,5 et 2,5 mm.

Les grilles formant les présents dispositifs de filtration peuvent être jointes par leurs extrémités supérieures à un couvercle.
Ce couvercle peut être réalisé sous la forme d'une rondelle de faible épaisseur présentant, de préférence en son centre, un moyen d'introduction du liquide à filtrer. Ce moyen d'introduction peut consister, par exemple, en un embout cylindrique, de préférence fileté, sur lequel on peut brancher le tuyau d'écoulement sortant du distributeur.
Ledit couvercle peut être joint aux grilles par scellage, soudage, collage ou tout autre moyen.

Dans la forme d'exécution comprenant des grilles en forme de sac cylindrique, le présent dispositif de filtration peut comprendre en outre un cône de ruissellement.
Ce cône, de préférence massif, peut être disposé la pointe en bas sous les extrémités inférieures des grilles. Il a pour but de rassembler en un filet bien défini, par ruissellement, le café filtré.
La base du cône de ruissellement peut être convexe, à savoir légèrement bombée, conique ou étagée, afin de mieux distribuer le liquide entrant vers les grilles filtrantes.

Les grilles, le couvercle et le cône de ruissellement peuvent être en métal, en polyester, en polyéthylène, en polychlorure de vinyl ou en téflon, ou en toute autre matière compatible avec le domaine alimentaire et susceptible de supporter une température de 100°C.

Dans la forme d'exécution comprenant des grilles en forme de sac conique ou de cône, la grille extérieure peut avoir, de préférence, un diamètre à la base du cône compris entre 20 et 50 mm, une hauteur comprise entre 10 et 40 mm et un angle d'ouverture du cône compris entre 30 et 120°.
Le couvercle circulaire peut avoir un diamètre compris entre 20 et 55 mm, de préférence égal au diamètre de la base du cône extérieur.

Dans la forme d'exécution comprenant des grilles en forme de sac cylindrique, la grille extérieure peut avoir, de préférence, un diamètre compris entre 20 et 50 mm, et une hauteur comprise entre 8 et 20 mm.
Le cône de ruissellement peut présenter, de préférence, un angle d'ouverture compris entre 30 et 120°, et un diamètre de préférence égal au diamètre de la grille extérieure.

Les dispositifs de filtration selon la présente invention sont décrits ci-après en référence au dessin dans lequel:
- la Fig. 1: représente une coupe longitudinale axiale d'une première forme d'exécution du présent dispositif,
- la Fig. 2: représente une vue latérale du dispositif de la figure 1,
- la Fig. 3: représente une coupe selon la ligne 3-3 du dispositif de la figure 1,
- la Fig. 4: représente une coupe longitudinale d'une seconde forme d'exécution du présent dispositif
- la Fig. 5: représente une vue latérale du dispositif de la figure 4.

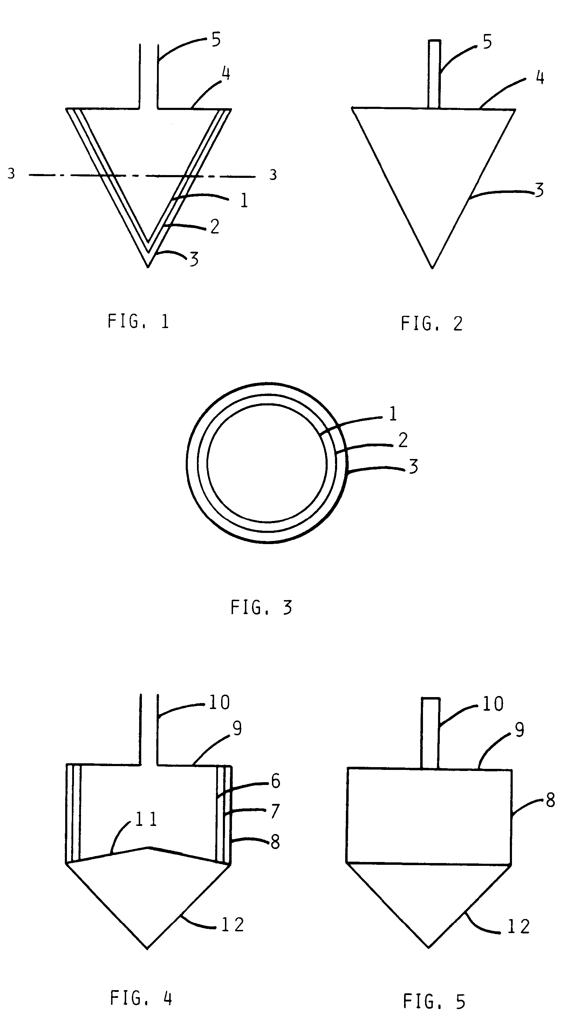

Dans la forme d'exécution représentée aux figures 1 à 3, le présent dispositif de filtration se compose d'une première grille en forme de sac conique (1), ou premier cône filtrant, imbriquée dans une seconde grille en forme de sac conique (2), ou second cône filtrant, légèrement plus grande que la première, elle-même imbriquée dans une troisième grille en forme de sac conique (3), ou troisième cône filtrant, légèrement plus grande que la seconde.
Les trois grilles sont superposées et imbriquées l'une dans l'autre de manière que les axes de révolution des cônes qu'elles constituent soient confondus.
Les bases ou extrémités supérieures de chacun des cônes filtrants sont solidaires d'un couvercle (4) de forme circulaire, de diamètre au moins égal au diamètre de la base du plus grand cône, autrement dit du cône formant la grille extérieure.
Ledit couvercle présente en son centre un moyen d'introduction du liquide à filtrer, consistant en un embout cylindrique fileté (5).

Dans la forme d'exécution représentée aux figures 4 et 5, le présent dispositif de filtration se compose d'une première grille en forme de sac cylindrique (6), ou premier cylindre filtrant, imbriquée dans une seconde grille en forme de sac cylindrique (7), ou second cylindre filtrant, de diamètre légèrement supérieur à celui de la première grille, elle-même imbriquée dans une troisième grille en forme de sac cylindrique (8), ou troisième cylindre filtrant, de diamètre légèrement supérieur à celui de la seconde grille, de manière que les axes de révolution de chaque cylindre filtrant soient confondus. Les extrémités supérieures des cylindres filtrants sont solidaires d'un couvercle (9) de forme circulaire, de diamètre égal au diamètre du cylindre extérieur et présentant en son centre un moyen d'introduction du liquide à filtrer, consistant en un embout cylindrique fileté (10).
Les extrémités inférieures des cylindres filtrants sont solidaires de la base bombée (11) d'un cône massif, ou cône de ruissellement (12), qui permet de contrôler l'écoulement dans la tasse du café sortant des cylindres filtrants.

## Revendications

1. Dispositif de filtration comprenant au moins deux grilles, les grilles présentant une forme de sac conique ou cylindrique, imbriquées les unes dans les autres caractérisé en ce que les dites grilles sont espacées les unes des autres par une distance comprise entre 0,5 et 4 mm afin de permettre l'obtention d'une mousse fine.

2. Dispositif selon la revendication 1 caractérisé en ce qu'un cône de ruissellement est disposé sous les extrémités inférieures desdites grilles.

3. Dispositif selon la revendication 1 caractérisé en ce qu'il comprenend entre 2 et 6 grilles.

4. Dispositif selon la revendication 1, caractérisé en ce que dans les grilles sont jointes par leurs extrémités supérieures à un couvercle présentant un moyen d'introduction du liquide à filtrer.

5. Dispositif selon la revendication 1, caractérisé en ce que les grilles sont imbriquées coaxialement les unes dans les autres.

6. Dispositif selon la revendication 1, caracterisé en ce que les grilles sont constituées de fils présentant un diamètre compris entre 0,08 et 0,20 mm, et un écartement de 0,10-0,50 mm.

## Patentansprüche

1. Filtervorrichtung, bestehend aus wenigstens zwei ineinandergesteckten Sieben in Form eines konischen oder zylindrischen Beutels, dadurch gekennzeichnet, daß die Siebe in einem Abstand von 0,5 bis 4 mm voneinander angeordnet sind, um einen feinen Schaum zu erzeugen.

2. Vorrichtung nach Anspruch 1, dadurch gekennzeichnet, daß unter den unteren Enden der Siebe ein Rieselkegel angeordnet ist.

3. Vorrichtung nach Anspruch 1, dadurch gekennzeichnet, daß sie zwei bis sechs Siebe besitzt.

4. Vorrichtung nach Anspruch 1, dadurch gekennzeichnet, daß die Siebe über ihre oberen Enden an einem Deckel angebracht sind, der eine Einrichtung zur Einführung der zu filtrierenden Flüssigkeit besitzt.

5. Vorrichtung nach Anspruch 1, dadurch gekennzeichnet, die Siebe koaxial ineinandergesteckt sind.

6. Vorrichtung nach Anspruch 1, dadurch gekennzeichnet, daß die Siebe aus Fäden bzw. Drähten bestehen, die einen Durchmesser von 0,08 bis 0,20 mm und einen Abstand von 0,10 bis 0,50 mm haben.

## Claims

1. A filtration device comprising at least two screens, the screens being in the form of conical or cylindrical bags fitted into one another, characterized in that the screens are spaced apart from one another by a distance of 0.5 to 4 mm to enable a fine froth to be obtained.

2. A device as claimed in claim 1, characterized in that a distributor cone is arranged beneath the lower ends of the screens.

3. A device as claimed in claim 1, characterized in that it comprises between 2 and 6 screens.

4. A device as claimed in claim 1, characterized in that the screens are joined at their upper ends to a cover comprising means for introducing the liquid to be filtered.

5. A filtration device as claimed in claim 1, characterized in that the screens are fitted coaxially into one another.

6. A filtration device as claimed in claim 1, characterized in that the screens are made of wires 0.08 to 0.20 mm in diameter arranged at intervals of 0.10 to 0.50 mm.
